# EUROPÄISCHE PATENTSCHRIFT

(11) **EP 2 715 322 B1**
(45) Veröffentlichungstag und Bekanntmachung des Hinweises auf die Patenterteilung: **24.06.2020**
(21) Anmeldenummer: 12723113.2
(22) Anmeldetag: 16.05.2012
(51) Int. Cl.: G01N 21/88

(54) **VERFAHREN UND VORRICHTUNG ZUR RISSPRÜFUNG EINES FLUGZEUG- ODER GASTURBINEN-BAUTEILS**
METHOD AND DEVICE FOR CHECKING CRACKS IN AN AIRPLANE OR GAS TURBINE COMPONENT
PROCÉDÉ ET DISPOSITIF POUR LE CONTRÔLE DES FISSURES D'UNE PIÈCE STRUCTURALE D'AVION OU DE TURBINE À GAZ

(30) Priorität: 24.05.2011 DE 102011103003
(43) Veröffentlichungstag der Anmeldung: 09.04.2014
(73) Patentinhaber: Lufthansa Technik AG, 22335 Hamburg (DE)
(72) Erfinder: ULLRICH, Thiemo, 25436 Heidgraben (DE); ERNST, Michael, 25421 Pinneberg (DE)
(74) Vertreter: Müller Verweyen
(86) Internationale Anmeldenummer: PCT/EP2012/002115
(87) Internationale Veröffentlichungsnummer: WO 2012/159721

(56) Entgegenhaltungen:
- DE-C1- 10 010 019
- US-A- 5 257 088
- US-A- 5 563 417
- US-B1- 6 195 891

## Beschreibung

Die Erfindung betrifft ein Verfahren zur Rissprüfung eines Flugzeug- oder Gasturbinen-Bauteils und eine Vorrichtung zur Rissprüfung eines Flugzeug- oder Gasturbinen-Bauteils.

Flugzeugbauteile sind im Betrieb einer hohen Beanspruchung ausgesetzt. Neben Bauteilen aus Verbundwerkstoffen, wie beispielsweise Strukturbauteile oder metallische Bauteile, wie beispielsweise Fahrwerksbauteile, kann dies insbesondere bei den Bauteilen des Flugzeugtriebwerks zu einer schadhaften Rissbildung führen. Ähnliche Schadensbilder sind auch bei anderen Gasturbinen, beispielsweise den stationären Gasturbinen vorhanden. Brennkammerbauteile sind bei Gasturbinen besonders stark von der Rissbildung betroffen.

Risse sind lokale Materialtrennungen innerhalb einer Struktur oder innerhalb eines Bauteils. Die Rissentstehung ist in der Regel ein lokales Ereignis in der Mikrostruktur der Oberfläche, das in der Regel durch Gitterfehler im Mikrogefüge oder durch zyklische Betriebsbelastungen verursacht wird. Risse breiten sich im Regelfall senkrecht zur wirkenden Normalspannung aus. Diese Ausbreitung wird als normalspannungsgesteuert bezeichnet.

Im Falle von Brennkammerbauteilen entstehen Risse durch hohe thermische und mechanische Belastung. Die Rissbildung wird zum einen durch die vorherrschenden hohen Temperaturen verursacht und zum anderen fördern die auf die Brennkammer übertragenen Schwingungen aus den vor- und nachgeschalteten Modulen, dem Hochdruckverdichter und der Hochdruckturbine das Risswachstum und die Rissbildung. Zudem begünstigen kurzzeitige thermische Materialspannungen während des Startens der Gasturbine und ggf. während der Startphase des Flugzeugs die Rissentstehung. In die Gasturbine eingesaugte feste Partikel, wie beispielsweise Sand und Staub, tragen ebenfalls stark zur Rissentstehung an Brennkammerkomponenten bei. Des Weiteren führen die dauerhaften thermischen Belastungen während der Betriebsphase der Gasturbine dazu, dass die geometrische Form der Brennkammerkomponenten eine Veränderung erfährt.

In der Instandhaltung von Flugzeug- und/oder Gasturbinen-Bauteilen, insbesondere in der Brennkammerinstandhaltung, besteht das Hauptproblem darin, die im Betrieb entstandenen Risse und Geometrieveränderungen zu detektieren und die Bauteile durch geeignete Maßnahmen zu reparieren. Aufgrund der individuell unterschiedlichen Riss- bzw. Beschädigungsausprägung gestaltet sich dies oft schwierig.

Bekannte Verfahren zur Rissprüfung umfassen eine Reihe von zerstörungsfreien Prüfverfahren. Derzeit eingesetzte Verfahren umfassen beispielsweise das Farbeindringverfahren, die Ultraschallprüfung, die Wirbelstromprüfung, die Röntgenprüfung und die Magnetpulverprüfung.

Die Mehrheit der Bauteile, insbesondere die Bauteile von Flugzeugtriebwerken, wie beispielsweise Brennkammerbauteile, werden mit Hilfe des Farbeindringverfahrens auf Risse geprüft.

Das Farbeindringverfahren umfasst dabei üblicherweise mindestens die folgenden fünf Arbeitsschritte:
1. Vorreinigung und Trocknung des Prüflings, um Verschmutzungen zwischen den Rissflanken zu beseitigen.
2. Auftragen des sogenannten Penetrants (Kriechöl mit fluoreszierenden Farbpigmenten), das in die Risse eindringt.
3. Zwischenreinigung (Entfernen des überschüssigen Penetrants) und Trocknung.
4. Auftragen des sogenannten Entwicklers (Pulver auf Kreidebasis), um die Risse zur Anzeige zu bringen.
5. Manuelle Auswertung der Anzeigen unter ultraviolettem Licht durch geschultes Personal. Dabei werden die Anzeigen (beispielsweise Risse) auf dem Prüfling markiert.

Im Anschluss an die Farbeindringprüfung wird eine Sichtkontrolle des Prüflings durchgeführt. Dabei wird manuell überprüft, ob es sich bei den Anzeigen tatsächlich um Risse handelt und ob die markierten Rissanzeigen innerhalb der zulässigen Toleranz liegen. Die Toleranzen ergeben sich aus den technischen Instandhaltungsunterlagen für das entsprechende Bauteil.

Im Anschluss an die Sichtkontrolle erfolgt die ebenfalls manuell durchgeführte Geometrievermessung des Prüflings. In den technischen Instandhaltungsunterlagen sind die zu prüfenden Maße und Messpositionen definiert. Durch geschultes Fachpersonal werden die Prüflinge mit Hilfe von Messutensilien, wie beispielsweise einem Spezialmaßband, vermessen und anschließend die genauen Geometriedaten dokumentiert.

Das aktuell bei den Bauteilen zur Anwendung kommende Farbeindringverfahren ist ein manuelles, sehr zeitaufwendiges Verfahren. Die Farbeindringprüfung hat mit ihren vielen Prozessschritten einen signifikanten Einfluss auf die Prozess- und Durchlaufzeit der Bauteilinstandhaltung. Zudem ist die Reproduzierbarkeit der Prüfung aufgrund der manuell durchgeführten Auswertung der Anzeigen nicht oder nur bedingt gegeben. Die Prüfqualität wird durch den menschlichen Faktor beeinflusst. Des Weiteren handelt es sich bei der Farbeindringprüfung um ein chemisches, energieintensives und damit umweltbelastendes Prüfverfahren.

In der US 6 195 891 B1 wird ein Verfahren zur Rissprüfung von Oberflächen offenbart, wobei ein fluoreszierendes Eindringmittel auf die zu prüfende Stelle aufgebracht und eine folgende Rissprüfung unter Verwendung von weißem und ultraviolettem Licht erfolgt.

Die US 5 563 417 A beschreibt ein automatisches Verfahren zur Rissprüfung mittels eines fluoreszierenden Eindringmittels, welches auf die zu prüfende Stelle aufgebracht und unter einer monochromatischen, ultravioletten Lichtquelle mittels einer Kamera geprüft wird.

Aus der DE 100 10 019 C1 ist ein Verfahren zur Zustandsüberwachung rotierender Laufräder von Schienenfahrzeugen bekannt, wobei die überwachten Laufradoberflächen laufend mit einem Phaseninterferometer optisch abgetastet werden.

Die US 5 257 008 A offenbart ein Interferometer zur Detektion von kleinen Deformationen in einer Oberfläche eines Vehikels.

Der Erfindung liegt demzufolge die Aufgabe zugrunde, ein verbessertes Verfahren und eine entsprechende Vorrichtung zur Rissprüfung eines Flugzeug- und/oder Gasturbinen-Bauteils bereitzustellen.

Die Erfindung löst diese Aufgabe mit den Merkmalen der unabhängigen Ansprüche. Weitere bevorzugte Ausgestaltungen der Erfindung sind den Zeichnungen, den Unteransprüchen und der zugehörigen Beschreibung zu entnehmen.

Zur Lösung der Aufgabe wird erfindungsgemäß ein Verfahren zur Rissprüfung eines Flugzeug- oder Gasturbinen-Bauteils vorgeschlagen, wobei das Verfahren die Verfahrensschritte nach Anspruch 1 aufweist.

Durch das erfindungsgemäße Verfahren ist es möglich, die Risse und/oder andere Beschädigungen des Flugzeug- oder Gasturbinen-Bauteils automatisch zu erfassen und zu kennzeichnen sowie die Position der Risse und/oder anderer Beschädigungen im Bezug auf das Bauteilkoordinatensystem zu speichern. Entsprechend des Befunds schließen sich ggf. Maßnahmen zur Bauteilreparatur an. Auf aufwendige Prüfungsverfahren, insbesondere auf das sehr aufwendige Farbeindringverfahren, kann verzichtet werden. Dadurch ist bei der Rissprüfung keine manuelle Inspektion der Bauteile erforderlich und der Wegfall des für das Farbeindringverfahren benötigten hohen Energiebedarfs (Erwärmung der Reinigungsbäder und Bauteiltrocknung) sowie der chemischen Substanzen (Penetrant, Reinigungsmittel und Entwickler) leistet einen Beitrag zur Reduzierung der Umweltbelastung. Insgesamt kann somit die Bauteildurchlaufzeit verringert werden und darüber hinaus wird die Prozesssicherheit und Reproduzierbarkeit verbessert. Das Verfahren findet bevorzugt an ausgebauten Bauteilen statt. Beispielsweise werden im Rahmen der Wartung oder Instandhaltung Triebwerksbauteile aus dem Flugzeugtriebwerk ausgebaut, gesäubert und dann mit dem erfindungsgemäßen Verfahren auf Risse und/oder andere Beschädigungen untersucht.

Optische Messverfahren umfassen dabei beispielsweise Messverfahren, beruhend auf sichtbarem Licht, Infrarotlicht, ultraviolettem Licht oder Laserlicht. Im Hinblick auf die geringen zu bestimmenden Abmessungen sind solche Messverfahren erfindungsgemäß, die sich die Welleneigenschaften des Lichts zu Nutze machen, nämlich interferometrische Verfahren, wobei kohärentes Licht bevorzugt wird. Nicht zu den optischen Messverfahren gehörend sind beispielsweise Verfahren, die auf Elektronen- oder Röntgenstrahlen, Ultraschall oder Wirbelstrom beruhen.

Vorzugsweise werden die ermittelten Geometriedaten automatisch mit vorzugsweise mathematisch vordefinierten und hinterlegten Merkmalen und/oder Soll-Konturen und/oder Toleranzen und/oder Schadensbildern verglichen. Dabei können Abweichungen des Bauteils durch den Vergleich der Geometriedaten mit vordefinierten Soll-Konturen und/oder bestimmten Bauteiltoleranzen erkannt und klassifiziert werden, oder aufgetretene Schäden durch den Vergleich mit typischen Schadensbildern und/oder dem Vergleich mit Vorgaben der Bauteilinstandhaltungsunterlagen erkannt werden.

Weiter bevorzugt können Vorabinformationen über das Bauteil - wie beispielsweise die nominale Bauteilgeometrie - dazu dienen, Vorkenntnisse über die zu erwartenden Geometriedaten dem Auswertemittel zuzuführen. In Verbindung mit einem sogenannten "Matching"-Prozess wird es dem Auswertemittel dadurch ermöglicht, automatisch zu entscheiden, ob Schäden an bestimmten Bauteilbereichen geometrisch bedingt auftreten können oder nicht. Beispielsweise soll eine Bohrung keinen Schaden darstellen bzw. nicht als solcher klassifiziert werden.

Vorzugsweise werden die ermittelten Geometriedaten zusätzlich für eine Vermessung des Bauteils genutzt. Eine Vermessung erfolgte üblicherweise im Anschluss an die Bauteilinspektion und bedeutete aufgrund einer Vielzahl von Messpositionen am Bauteil einen zusätzlichen Aufwand. Dabei war die Genauigkeit der Messergebnisse auch deutlich abhängig von dem Wissen und der Sorgfalt des durchführenden Personals. Durch Nutzung der für die Rissprüfung ohnehin notwendigen Geometriedaten zur Vermessung der Bauteile kann der Aufwand für die Bauteilinstandhaltung weiter vermindert und die Qualität gesteigert werden.

Gut geeignet ist das erfindungsgemäße Verfahren für solche Flugzeug- oder Gasturbinen-Bauteile, die als Brennkammerbauteil eines Flugzeugtriebwerks eingesetzt werden. Brennkammerbauteile unterliegen hohen Belastungen und die Rissprüfung ist üblicherweise mit hohem Aufwand verbunden, der durch das erfindungsgemäße Verfahren deutlich reduziert werden kann.

Erfindungsgemäß erfolgt die Ermittelung der Geometriedaten mit Hilfe eines Interferometrieverfahrens. Bei der Interferometrie erfolgt eine Messung durch Ausnutzung des Interferenz-Effekts von Licht. Ein dabei bevorzugtes Interferometer für das Verfahren ist das Michelson-Interferometer, bei dem kohärentes Licht aufgespalten und mit sich selbst zur Interferenz gebracht wird. Durch das Nutzen von Interferometrie können die Risse und/oder Beschädigungen gut detektiert werden.

Erfindungsgemäß erfolgt die Ermittlung der Geometriedaten mit Hilfe von Weißlichtinterferometrie. Weißlichtinterferometrie ist zur Detektion von Rissen und anderen Beschädigungen bevorzugt, da mit ihr die Oberfläche der Bauteile hochgenau geprüft werden kann.

Vorzugsweise wird das optische Messverfahren mit Abstand in einem Bereich zwischen 1 und 100 mm, bevorzugt in einem Bereich zwischen 10 und 50 mm von der Oberfläche des Bauteils zu einer optischen Messvorrichtung durchgeführt. Ein weiter bevorzugter Abstand von 20 bis 30 mm führt erfahrungsgemäß zu guten Ergebnissen.

Vorzugsweise werden die ausgewerteten Geometriedaten zur Feststellung des Reparaturbedarfs und/oder -umfangs des Bauteils genutzt. Dadurch ist nach dem Prüfungsverfahren unmittelbar feststellbar, welche Reparaturen und/oder Bearbeitungsschritte notwendig sind, um das Bauteil wieder soweit aufzubereiten, dass es den gängigen Erfordernissen, beispielsweise der luftfahrtrechtlichen Zulassung und/oder bestimmten Vorgaben der Triebwerkshersteller entspricht.

Vorzugsweise werden die ausgewerteten Geometriedaten für eine anschließende Reparatur und/oder Bearbeitung des Bauteils genutzt. Beispielsweise können so die Geometriedaten für eine automatisierte Schweißbehandlung verwendet werden. Die Positionen der Risse und/oder anderer Beschädigungen in dem Koordinatensystem des Bauteils sind bereits durch die Rissprüfung bekannt, so dass beim Reparaturverfahren automatisiert an den entsprechenden Stellen geschweißt oder anderweitig nachbearbeitet werden kann. Zusätzlicher Programmieraufwand und damit ungewünschte manuelle Prozessschritte können im Zuge eines vollautomatisierten Reparaturdurchlaufs entfallen und das Bauteil kann verhältnismäßig schnell wieder eingesetzt werden.

Zur Lösung der Aufgabe wird ferner eine Vorrichtung zur Rissprüfung eines Flugzeug- oder Gasturbinen-Bauteils vorgeschlagen, wobei die Vorrichtung eine optische Messvorrichtung und ein elektronisches Auswertemittel aufweist und zur Durchführung des beschriebenen Verfahrens eingerichtet ist.

Durch die Vorrichtung können die Bauteile in erfindungsgemäßer vorteilhafter Art und Weise auf Risse und andere Beschädigungen hin überprüft werden.

Vorzugsweise umfasst die Vorrichtung dazu eine Manipulationsvorrichtung, mittels derer die Messvorrichtung und das Bauteil relativ zueinander bewegbar sind. Dabei kann einerseits das Bauteil stationär sein und die Messvorrichtung wird an und/oder um das Bauteil bewegt, oder die Messvorrichtung ist fest und das Bauteil wird bewegt. Schließlich ist es auch möglich, dass das Bauteil und die Messvorrichtung eine Bewegung vollziehen. So umfasst die Manipulationsvorrichtung vorzugsweise einen Drehtisch, auf dem das Bauteil zur Prüfung um seine eigene Achse gedreht werden kann und einen Roboter, wodurch die Messervorrichtung automatisiert in eine für ein optimales Ergebnis förderliche Position bewegt werden kann. Die Messvorrichtung ist dabei bevorzugt auf einer linearen Achse, beispielsweise realisiert durch eine Lineareinheit, zu dem Bauteil hin verschiebbar angeordnet. Die Lineareinheit kann beispielsweise als Linearversteller ausgeführt sein. Durch eine solche verschiebbar angeordnete Messvorrichtung können präzise Höhenbilder erzeugt werden.

Dadurch, dass die Messvorrichtung und das Bauteil zueinander bewegbar sind, ist diese auch zur Rissprüfung von unterschiedlich großen Bauteilen gut geeignet, da der optimale Arbeitsabstand bauteilspezifisch eingestellt werden kann.

Vorzugsweise wird während der Prüfung die Messvorrichtung adaptiv in die bestmögliche Messposition bewegt. Aufgrund der bauteilindividuell unterschiedlichen Geometrieabweichungen erfolgt eine Bahnkorrektur der Messvorrichtung. Diese Bahnkorrektur kann beispielsweise mit Hilfe eines Abstandssensors und/oder durch eine softwareseitige Bahnkorrektur, also durch den Abgleich der Ist-Geometrie mit der Nominal-Geometrie des Bauteils, realisiert werden. Vorzugsweise erfolgt eine Offline-Bahnkorrektur mittels einer initialen Messfahrt und/oder eine Online-Bahnkorrektur während des Messvorgangs.

Vorzugsweise umfasst die optische Messeinrichtung somit einen Abstandssensor, der mit Hilfe der Steuerungseinrichtung eine automatische Online- und/oder Offline-adaptive Bahnkorrektur der Manipulationsvorrichtung ermöglicht.

Zudem ist es bevorzugt, dass das Auswertemittel die Geometrieinformationen anhand vordefinierter Merkmale und/oder Soll-Konturen und/oder Toleranzen und/oder Schadensbildern und/oder erlernter Regeln und/oder Vorkenntnisse über die zu erwartenden Geometrieinformationen automatisch auswertet und zur Erkennung und/oder Klassifikation von Beschädigungen nutzt.

Vorzugsweise umfasst die Manipulationsvorrichtung einen Roboterarm und/oder einen Drehtisch. Durch den Roboterarm und/oder den Drehtisch kann die Messvorrichtung oder auch das Bauteil automatisiert in die gewünschte Position gebracht werden.

Vorzugsweise umfasst die Vorrichtung ein automatisiertes Regallager, in welchem das Bauteil und vorzugsweise zusätzlich ein Werkstückträger gelagert werden. Durch das bevorzugt in modularer Bauweise aufgebaute Regallager kann die Bauteilzuführung und -lagerung verbessert und noch weiter automatisiert werden. Der Transport des Bauteils zu einer Vermessungsposition erfolgt vorzugsweise durch ein automatisiertes Transportsystem welches eine Hubeinheit und/oder eine Hubstation umfasst. Über das Transportsystem kann das Bauteil, nachdem es beispielsweise aus dem Regallager automatisch ausgewählt und entnommen wurde, in einfacher Weise weiter transportiert werden.

Vorzugsweise ist für den Transport und/oder zur Aufnahme des Bauteils ein Werkstückträger vorgesehen. Durch den Werkstückträger, vorzugsweise in Verbindung mit einem Nullpunktspannsystem, können die Bauteile in der Anlage leicht gehandhabt, exakt positioniert, effizient gerüstet und gleichzeitig schnell referenziert werden. Außerdem bietet der Werkstückträger die Möglichkeit, das Bauteil ohne weitere Umspannvorgänge in nachfolgenden Prozessen automatisiert zu bearbeiten.

Vorzugsweise umfasst die Vorrichtung eine Mechanik, die einen oder mehrere Umlenkspiegel umfasst und bevorzugt einen Endoskopaufsatz aufweist. Durch diese Elemente können schwer zugängliche Bauteilbereiche, die sonst nur schwer oder gar nicht geprüft werden können, durch das Verfahren erreicht werden. Beispielsweise können dadurch Zwischenräume von sich überlappenden Bauteilbereichen oder Hinterschnitte untersucht werden. Vorzugsweise umfasst die Vorrichtung demnach einen Umlenkspiegel und/oder ein Endoskop für die Messvorrichtung. Vorzugsweise findet das Verfahren mit einer Auflösung in einem Bereich zwischen 1 bis 50 µm, weiter bevorzugt 5 bis 30 µm, beispielsweise ungefähr 10 bis 20 µm statt. Das Messfeld liegt vorzugsweise in einem Bereich zwischen 1 bis 50 mal 1 bis 50 mm², weiter bevorzugt in einem Bereich von 5 bis 25 mal 5 bis 25, beispielsweise ungefähr 20 mal 20 mm². Das Messfeld kann auch in einem bevorzugten Bereich zwischen 0,25 bis 50 mal 0,25 bis 50 mm², weiter bevorzugt in einem Bereich von 1 bis 15 mal 1 bis 15, beispielsweise ungefähr 3 mal 3 mm², liegen.

Die Erfindung ist in den unabhängigen Ansprüchen definiert.

Die Erfindung wird im Folgenden anhand bevorzugter Ausführungsformen unter Bezugnahme auf die beigefügten Figuren erläutert. Dabei zeigt:
- Fig. 1: eine schematische Darstellung einer Rissprüfung an einem Bauteil mittels eines Interferometrieverfahrens;
- Fig. 2: eine Darstellung des erfindungsgemäßen Verfahrens zur Rissprüfung sowie eine erfindungsgemäße Vorrichtung zur Durchführung des Verfahrens.

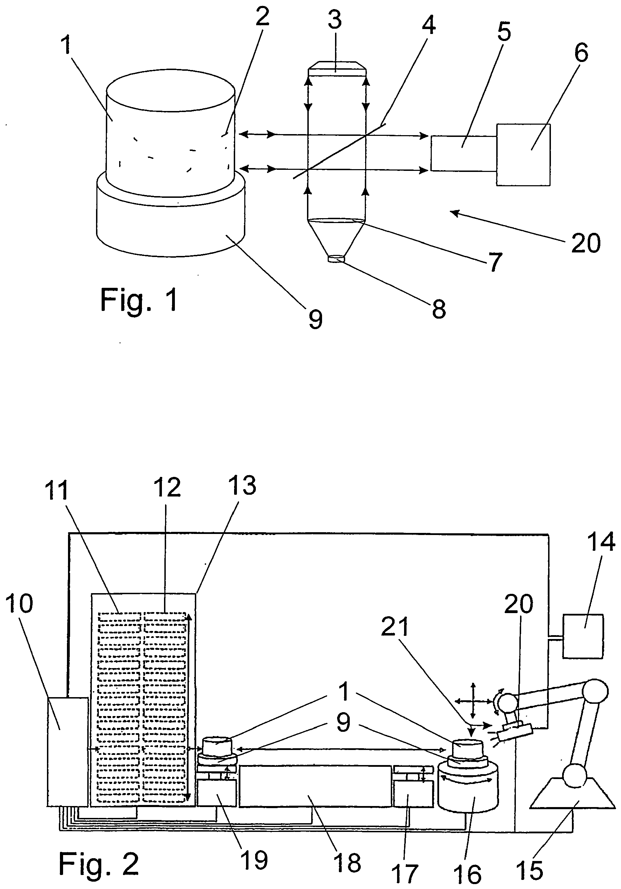

In der Figur 1 ist ein Flugzeug- oder Gasturbinen-Bauteil 1 dargestellt, welches auf einem Werkstückträger 9 angeordnet ist. Das Bauteil 1 kann beispielsweise ein CFK-Bauteil, beispielsweise ein Strukturbauteil oder ein metallisches, beispielsweise ein Fahrwerksbauteil sein. Des Weiteren kann das Bauteil 1 auch aus einer stationären Gasturbine stammen. In diesem Ausführungsbeispiel handelt es sich bei dem Bauteil 1 um ein Bauteil aus der Brennkammer eines Flugzeugtriebwerkes. Die Oberfläche des Brennkammerbauteils soll auf das Vorhandensein möglicher Defekte, beispielsweise Risse 2, Verbrennungen, Deformationen oder andere Beschädigungen überprüft werden. Eine solche Überprüfung erfolgt üblicherweise im Rahmen der Instandhaltung von Triebwerksbauteilen. Es existieren luftfahrtrechtliche Standards und Anforderungen an die Bauteilbeschaffenheit. So dürfen die Brennkammerbauteile beispielsweise nur in bestimmtem Umfang Risse 2 aufweisen. Auch die erlaubte Rissgeometrie, beispielsweise die maximal zulässige Größe der Risse 2 ist vorgeschrieben. Um diesen Anforderungen gerecht zu werden, erfolgt üblicherweise eine Rissprüfung durch das eingangs erwähnte Farbeindringverfahren. Das Verfahren ist jedoch mit den beschriebenen Nachteilen verbunden.

Um auf das aufwendige Farbeindringverfahren verzichten zu können, erfolgt die Rissprüfung des Brennkammerbauteils erfindungsgemäß unter Zuhilfenahme eines optischen Messverfahrens, nämlich eines Interferometrieverfahrens. Erfindungsgemäß findet dabei die Weißlichtinterferometrie Anwendung. Wie in der Figur 1 dargestellt, wird dazu eine Messvorrichtung 20, insbesondere ein Interferometer vorgesehen. Die Messvorrichtung 20 umfasst dabei eine kohärente Lichtquelle 8, insbesondere einen Laser mit einem Kollimator 7 zur Bereitstellung von parallelem kohärentem Licht. Des Weiteren umfasst die Messvorrichtung 20 einen Strahlteiler 4, einen Referenzspiegel 3 sowie eine Kameraeinheit 6 mit Objektiveinheit 5.

Das zu prüfende Brennkammerbauteil und der Referenzspiegel 3 werden gleichzeitig mit dem kohärenten, breitbandigen Licht von der Lichtquelle 8 beleuchtet. Dazu werden die Lichtwellen in dem Strahlteiler 4 in zwei Lichtpakete aufgeteilt. Das Brennkammerbauteil und der Referenzspiegel 3 reflektieren die Lichtwellen, die wiederum über den Strahlteiler 4 auf die Kameraeinheit 6 treffen. Dabei kommt es dann zur Entstehung von Interferenzmustern, wenn die Weglänge zum Bauteil 1 mit der Weglänge zum Referenzspiegel 3 übereinstimmen. Diese Interferenzmuster oder Helligkeitsschwankungen werden von der Kameraeinheit 6 detektiert. Beim phasengleichen und ordnungsrichtigen Aufeinandertreffen kommt es zur maximalen konstruktiven Interferenz. Kommen die Wellenpakete phasenrichtig, aber ordnungsverschoben und teilüberlappend zusammen, erhält man eine weniger ausgeprägte konstruktive Interferenz. Treffen die Wellenpakete hintereinander auf den Detektor, so entsteht keine Interferenz.

Die gemessenen Helligkeitsschwankungen werden von einer Software ausgewertet. Ein zur Auswertung verwendetes Auswertemittel 14 kann dabei die Kameraeinheit 6 und/oder einen bzw. mehrere Computer umfassen. Unter Einsatz mathematischer Algorithmen, die den Helligkeitsschwankungen Höhenwerte zuordnen, werden durch die Messung Geometriedaten ermittelt bzw. erzeugt. Mathematisch wird jedem Pixel ein Höhenwert zugeordnet, wodurch eine sog. "Punktewolke" erzeugt wird. Dadurch kann die Topographie der Bauteiloberfläche mit einer Auflösung im Bereich der Oberflächenrauhigkeit bestimmt werden. Die Bauteiloberfläche kann mit einer Auflösung von 0,3 µm bis 130 µm und einem Messfeld von 0,3 mal 0,3 mm² bis 130 mal 130 mm² auf Beschädigungen untersucht werden, vorzugsweise findet die Untersuchung mit einer Auflösung in einem Bereich zwischen 1 bis 50 µm, weiter bevorzugt 5 bis 30 µm, beispielsweise ungefähr 10 bis 20 µm statt. Das Messfeld liegt vorzugsweise in einem Bereich zwischen 1 bis 50 mal 1 bis 50 mm², weiter bevorzugt in einem Bereich von 5 bis 25 mal 5 bis 25, beispielsweise ungefähr 20 mal 20 mm². In diesem Ausführungsbeispiel liegt das Messfeld in einem bevorzugten Bereich zwischen 0,25 bis 50 mal 0,25 bis 50 mm², weiter bevorzugt in einem Bereich von 1 bis 15 mal 1 bis 15, beispielsweise ungefähr 3 mal 3 mm². Risse 2 und/oder andere zum Teil sehr kleine Beschädigungen können detektiert und identifiziert werden. Vorzugsweise erfolgt ein automatisierter Vergleich der ermittelten Geometriedaten mit hinterlegbaren Soll-Konturen und/oder Toleranzen und/oder typischen Schadensbildern. Diese Soll-Konturen und/oder Toleranzen und/oder typischen Schadensbilder können beispielsweise alte Geometriedaten sein, die von demselben Bauteil 1 stammen und bei der letzten Instandhaltung und Rissprüfung gespeichert wurden. Die Toleranzen können beispielsweise aus luftfahrtrechtlichen Vorgaben abgeleitet sein, wodurch es ermöglicht wird, im Anschluss an das erfindungsgemäße Verfahren direkt die Informationen zur Verfügung zu haben, ob das Bauteil 1 den Vorgaben entspricht, oder ob noch Ausbesserungen nötig sind. Ausbesserungen können dabei beispielsweise das Verschließen von Rissen 2 durch Schweißungen sein. Ziel der Ausbesserung ist, das Bauteil 1 so zu reparieren, dass es den Sicherheitsbestimmungen entspricht und damit wieder flugfähig ist.

Im Zuge des Prüfungsverfahrens werden die Messdaten vorzugsweise in einem angeschlossenen Rechnercluster ausgewertet, den das Auswertemittel 14 vorzugsweise mit umfasst. Dabei wird die gemessene Bauteiloberfläche vorzugsweise zunächst durch mathematische Umformungen in eine Ebene transformiert und die Oberflächenkrümmung herausgerechnet. Der verwendete Computer bzw. die verwendete Software ist dazu bevorzugt so eingerichtet, dass sie bestimmte Merkmale bzw. Kombination von Merkmalen oder Oberflächeneigenschaften, welche bestimmte vordefinierte Bedingungen erfüllen, beispielsweise die Eigenschaft "Riss" oder "Beschädigung" zuordnet und die Koordinaten dieses Befundes speichert. Dadurch können die Befunde, auch Schadensbilder genannt, beispielsweise auf einem Computerbildschirm angezeigt werden, wobei die Information über die Position - also die Absolutposition im verwendeten Koordinatensystem - gespeichert wird. Vorzugweise kann das Bauteil 1 zusammen mit den Befunden auf einem Computerbildschirm dargestellt werden, wobei "kritische" Befunde, also solche, die eine Nachbearbeitung erfordern, besonders gekennzeichnet sind. Die ermittelten Geometriedaten werden zusätzlich für eine Vermessung des Bauteils 1 genutzt. Diese Vermessung erfolgt nach aktuellem Stand der Technik üblicherweise manuell im Anschluss an die Rissprüfung und stellt einen separaten, zeitaufwendigen Arbeitsschritt dar. Im Gegensatz dazu ist durch das erfindungsgemäße Verfahren eine zusätzliche Geometrievermessung bzw. ein zusätzlicher Arbeitsschritt nicht mehr erforderlich.

Die Speicherung der ermittelten Geometriedaten und der Befunde, wie Risse 2, Verbrennungen oder andere Beschädigungen, erfolgt vorzugsweise in Form von Polygonzügen und/oder Polygonen. Die Geometriedaten, die wie beschrieben zunächst in Form einer Punktewolke vorliegen, werden durch einen sog. "Meshing" oder "Paving" Prozess und durch Flächenrückführung in ein CAD-Modell transformiert. Dieses Modell kann für weitere automatisierte, vorzugsweise adaptiv automatisierte Bearbeitungsschritte genutzt werden.

Durch das optische Messverfahren können die relevanten Bauteilmaße bereits im Rahmen der Rissprüfung (mit-)erfasst werden. Bauteilmaße, die gemäß der Instandhaltungsvorschriften zu dokumentieren sind, werden automatisch abgespeichert und stehen vorzugsweise auch als Protokoll zur Verfügung. Die Maßbestimmung erfolgt dabei vorzugsweise an vordefinierten Messpositionen, wodurch eine hohe Reproduzierbarkeit und Prozesssicherheit des Messvorgangs erreicht werden kann. Anschließend werden die Messdaten an einen oder mehrere angeschlossene Computer weitergeleitet. Der oder die Computer sind dazu eingerichtet die Messdaten auszuwerten. Vorzugsweise werden die Messdaten in einer Datenbank abgelegt, um eine Langzeitdokumentation zu ermöglichen. Dadurch kann die Veränderung desselben Bauteils 1 über seine Lebenszeit beobachtet werden. Die Bauteile 1 durchlaufen in ihrer Lebenszeit in der Regel mehrere Male die Instandhaltungsprozesse und die ermittelten Daten können somit mit den Daten von der vorherigen Instandhaltung verglichen werden.

Vorzugsweise ist der eingesetzte Computer bzw. die eingesetzte Rechnereinheit in der Lage, die gesammelten Messwerte direkt über eine Datenschnittstelle in das elektronische Dokumentationssystem der entsprechend zugeordneten Werkstatt zu übertragen. Vorzugsweise kann dem Fachpersonal jegliche Abweichung von der Soll-Kontur des Bauteils 1 bzw. Überschreitungen der zulässigen Toleranzen optisch auf einem sog. "User Interface" dargestellt werden. Dadurch kann das Fachpersonal schnell und messgenau einschätzen, wie mit der Instandhaltung des Bauteils 1 weiter zu verfahren ist.

Vorzugsweise erfolgt die gesamte Bauteilinspektion vollautomatisiert. Eine derartige vollautomatisierte Bauteilinspektion, die eine Rissprüfung und eine Vermessung der Bauteile umfasst, ist in der Figur 2 dargestellt. Das Festlegen des Reparaturumfangs (beispielsweise "Riss mit Schweißnaht" oder "Riss-Cluster mit Patch") erfolgt dabei ebenfalls automatisiert. Ein "Riss-Cluster" bezeichnet eine spezielle Rissstruktur, bei der viele Risse an zumindest einer Stelle miteinander verbunden sind oder lokal dicht zusammen liegen. Bei einer "Riss-Cluster mit Patch" Reparatur wird der schadhafte Bereich aus dem Bauteil 1 herausgetrennt und ein Ersatzstück, der "Patch", auch "Flicken" genannt, an dessen Stelle eingesetzt und mit dem zu reparierenden Bauteil 1 verbunden. Das Ersatzstück stammt vorzugsweise aus einem anderen, als Ganzes nicht mehr flugtauglichen Bauteil, bei dem jedoch zumindest der entfernte Ersatzstückbereich den luftfahrtrechtlichen Anforderungen noch entspricht.

Wie beschrieben, werden detektierte Beschädigungen anhand von vordefinierten Beschädigungsmerkmalen und/oder Toleranzen und/oder Schadensbildern klassifiziert, in den aufgenommenen Messdaten markiert und darauf basierend kann eine geeignete Bearbeitungsstrategie (beispielsweise eine Schweißbehandlung) festgelegt werden. Dabei kann eine vollautomatisierte Bearbeitung vorgesehen werden, bei der das Bauteil 1 an den schadhaften Stellen automatisch repariert wird, oder eine teilautomatisierte Bearbeitung, bei der durch das Verfahren beispielsweise nur eine automatisierte Markierung der zu reparierenden Stellen mit Hilfe eines Kennzeichnungsmittels erfolgt, weitere Reparaturschritte (wie beispielsweise Schweißungen) jedoch noch manuell durchgeführt werden.

Das zu prüfende Bauteil 1 befindet sich zunächst mit anderen zu prüfenden Bauteilen 1 in dem Bauteilmagazin 12. Das Bauteilmagazin 12 ist Teil des automatisierten Regallagers 13. Neben dem Bauteilmagazin 12 umfasst das automatisierte Regallager 13 zusätzlich ein Werkstückträgermagazin 11. Im Werkstückträgermagazin 11 werden Werkstückträger 9 gelagert. Die einzelnen Werkstückträger 9 können sich für einzelne oder mehrere Arten von Bauteilen 1 eignen.

An das Regallager 13 schließt sich ein automatisiertes Transportsystem 18 an. Dieses umfasst eine Hubstation 19 am Regallager 13 sowie eine Hubeinheit 17 am Drehtisch 16. Der Drehtisch 16 ist Teil einer Manipulationseinrichtung 21, welche auch einen Roboterarm 15 umfasst. Durch den Roboterarm 15 kann eine Messvorrichtung 20, welcher der Messvorrichtung 20 aus der Figur 1 entspricht, und das Bauteil 1 automatisiert in die gewünschte Position bzw. Messposition gebracht werden.

Mit der Messvorrichtung 20 verbunden ist ein Auswertemittel 14, welches für die Auswertung der durch das optische Messverfahren ermittelten Geometriedaten in der bereits beschriebenen Art und Weise eingesetzt wird.

Weiterhin ist eine Steuerungseinrichtung 10 und/oder eine Regelungsreinrichtung vorgesehen, die so eingerichtet ist, dass sie den Ablauf des Verfahrens steuert, regelt und automatisch ablaufen lassen kann. Vorzugsweise ist die Regelungs- bzw. Steuerungseinrichtung 10 in der Lage eine In-Prozess-Regelung durchzuführen. Die Regelungs- bzw. Steuerungseinrichtung 10 ist hier bevorzugt in der Lage eine Online- und/oder Offline-Regelung des Messprozesses durchzuführen und insbesondere eine Bahnkorrektur durchzuführen.

Das Brennkammerbauteil wird in dem automatisierten Regallager 13 gelagert. Der Steuerungseinrichtung 10 wird die Information über Auftragspriorisierung und Auswahl des Prüfungsverfahrens bzw. des Prüfprogramms und des Werkstückträgers 9 vorzugsweise über Einlesen eines Barcodes oder eines Data Matrix Codes übermittelt.

Soll das Brennkammerbauteil vollautomatisch geprüft werden, laufen eine Reihe von automatisierten Schritten ab. Es wird zunächst ein für das Brennkammerbauteil geeigneter Werkstückträger 9 vom System ausgewählt und auf der Hubstation 19 platziert. Nach anschließendem Absenken der Hubstation 19 erfolgt die Auslagerung des Brennkammerbauteils auf den Werkstückträger 9. Dabei wird bevorzugt über eine mechanische Schnittstelle zwischen Werkstückträger 9 und der Hubstation 19 die Fixierung (beispielsweise Klemmung) des Bauteils 1 im Werkstückträger 9 aktiviert. Über das Transportsystem 18 wird der Werkstückträger 9 mit dem Bauteil 1 zur Hubeinheit 17 bewegt und über die Hubeinheit 17 auf den Drehtisch 16 transportiert. Bei Bedarf besteht auch die Möglichkeit das Bauteil 1 manuell auf dem Drehtisch 16 zu rüsten und das Prüfverfahren bzw. das Prüfprogramm an der Steuerungseinrichtung 10 manuell auszuwählen.

Nachdem über eine Schnittstelle zwischen Werkstückträger 9 und Drehtisch 16 ein entsprechendes Signal an die Steuereinrichtung 10 gesendet wurde, beginnt das Ermitteln der Geometriedaten. Der Roboterarm 15 führt die Messeinrichtung 20 auf einen definierten Abstand von vorzugsweise 20 bis 30 mm an die Bauteiloberfläche heran. Vorzugsweise weist der Roboterarm dazu eine Lineareinheit auf. Durch die Manipulationseinrichtung 21 werden die Messeinrichtung 20 und das Bauteil 1 in die gewünschten Messpositionen bewegt. Dabei können der Steuereinrichtung 10 bestimmte bevorzugte Messverfahren bzw. Messprogramme vorgegeben werden, die Teil des Prüfungsverfahrens bzw. Prüfprogramms sind und für das Bauteil 1 und andere Flugzeug- oder Gasturbinen-Bauteile 1 geeignet sind. Vorzugweise ist in der Steuereinrichtung 10 hinterlegt, welches Messverfahren mit welchen Messpositionen für welches Bauteil 1 durchzuführen ist. Der Abstandssensor, der Teil der optischen Messeinrichtung 20 ist, ermittelt zunächst Geometrievorinformationen des Bauteils 1, die zur Kalibrierung der Ist- mit der Nominal-Geometrie des Bauteils dient und basierend darauf eine Bahnkorrektur der Manipulationsvorrichtung 21 ermöglicht. Vorzugsweise bewegt der Drehtisch 16 das Bauteil 1 an der Messeinrichtung 20 getaktet vorbei. Weiter bevorzugt bewegt der Drehtisch 16 das Bauteil 1 kontinuierlich drehend an der Messeinrichtung 20 vorbei. Bei einer getakteten Rotation entspricht die getaktete Schrittlänge in Umfangsrichtung vorzugsweise einer Bildbreite, wobei sich die Bilder zur vollständigen Erfassung der Bauteiloberfläche vorzugsweise überlappen. Vorzugsweise überlappen sich die einzelnen Bilder um 0,1 bis 10 mm, bevorzugt 0,5 bis 5 mm und weiter bevorzugt 1 bis 2 mm. Die einzelnen Bilder können sich vorzugsweise auch um 0,01 bis 5 mm, bevorzugt 0,05 bis 3 mm und weiter bevorzugt 0,1 bis 1 mm überlappen. Das angeschlossene Auswertemittel 14 wertet die Bilder bzw. Geometriedaten aus. Dabei werden vorzugsweise Risse 2 detektiert, die eine Rissbreite aufweisen, die mindestens 5 µm, weiter bevorzugt mindestens 20 µm beträgt. Es können weiterhin auch vorzugsweise Risse 2 detektiert werden, die eine Rissbreite aufweisen, die mindestens 1 µm, weiter bevorzugt mindestens 10 µm beträgt. Auch Beschädigungen werden durch das Auswertemittel 14 identifiziert und klassifiziert. Die Ergebnisse dieser Befunde sind anzeigbar und können bei Bedarf beispielsweise auf einem Computerbildschirm eingesehen werden. Anhand der Ergebnisse entscheidet das verantwortliche Fachpersonal, ob und ggf. welche weiteren Instandhaltungsmaßnahmen vorgesehen werden. Dies geschieht über eine Mensch-Maschinen-Schnittstelle, ein sog. "User Interface". Vorzugsweise entscheidet ein sog. "Expertensystem" durch vordefinierte Merkmale und/oder Toleranzen und/oder Regeln und/oder typischer Schadensbilder und/oder anhand früherer Entscheidungen eigenständig innerhalb einer automatisierten Reparaturprozesskette, welche weiteren Instandhaltungsmaßnahmen auf Basis der Befunde erforderlich sind und leitet diese entsprechend ein.

### Bezugszeichenliste:

- 1: Bauteil
- 2: Riss
- 3: Referenzspiegel
- 4: Strahlteiler
- 5: Objektiveinheit
- 6: Kameraeinheit
- 7: Kollimator
- 8: Lichtquelle
- 9: Werkstückträger
- 10: Steuerungseinrichtung
- 11: Werkstückträgermagazin
- 12: Bauteilmagazin
- 13: Regallager
- 14: Auswertemittel
- 15: Roboterarm
- 16: Drehtisch
- 17: Hubeinheit
- 18: Transportsystem
- 19: Hubstation
- 20: Messvorrichtung
- 21: Manipulationseinrichtung

## Patentansprüche

1. Verfahren zur Rissprüfung eines Flugzeug- oder Gasturbinen-Bauteils (1) mittels einer optischen Messvorrichtung (20), **dadurch gekennzeichnet, dass** die optische Messvorrichtung (20) einen Abstandssensor und ein Interferometer mit einem Strahlteiler (4) aufweist, wobei das Verfahren mindestens die folgenden Verfahrensschritte aufweist:
a) Heranführen der Messvorrichtung (20) auf einen definierten Abstand an die Bauteiloberfläche,
b) Ermittlung von Geometriedaten des Bauteils (1) mit Hilfe eines optischen Messverfahrens, wobei das optische Messverfahren ein Interferometrieverfahren ist, wobei die Ermittlung der Geometriedaten mit Hilfe von Weißlichtinterferometrie erfolgt,
c) Auswerten der Geometriedaten durch ein elektronisches Auswertemittel (14), wobei Risse (2) und/oder andere Beschädigungen automatisch erkannt und/oder automatisch klassifiziert werden und die Position der Risse (2) und/oder anderer Beschädigungen gespeichert wird.

2. Verfahren nach Anspruch 1, **dadurch gekennzeichnet, dass** die ermittelten Geometriedaten automatisch mit vorzugsweise mathematisch vordefinierten und hinterlegten Merkmalen und/oder Soll-Konturen und/oder Toleranzen und/oder Schadensbildern verglichen werden.

3. Verfahren nach Anspruch 1 oder 2, **dadurch gekennzeichnet, dass** die ermittelten Geometriedaten zusätzlich für eine Vermessung des Bauteils (1) genutzt werden.

4. Verfahren nach einem der vorangegangenen Ansprüche, **dadurch gekennzeichnet, dass** es sich bei dem Flugzeug- oder Gasturbinen-Bauteil (1) um ein Brennkammerbauteil eines Flugzeugtriebwerks handelt.

5. Verfahren nach einem der vorangegangenen Ansprüche, **dadurch gekennzeichnet, dass** die ausgewerteten Geometriedaten zur Feststellung des Reparaturbedarfs und/oder -umfangs des Bauteils (1) genutzt werden.

6. Verfahren nach Anspruch 5, **dadurch gekennzeichnet, dass** die ausgewerteten Geometriedaten für eine anschließende, vorzugsweise automatisierte Reparatur und/oder Bearbeitung des Bauteils (1) genutzt werden.

7. Vorrichtung zur Rissprüfung eines Flugzeug- oder Gasturbinen-Bauteils (1), **dadurch gekennzeichnet, dass** die Vorrichtung eine optische Messvorrichtung (20) und ein elektronisches Auswertemittel (14) aufweist, wobei die Vorrichtung eine Manipulationsvorrichtung (21) umfasst, mittels derer die Messvorrichtung (20) und das Bauteil (1) relativ zueinander bewegbar sind, wobei die optische Messeinrichtung (20) einen Abstandssensor umfasst, der mit Hilfe einer Steuerungseinrichtung (10) eine automatische Online- und/oder Offline-adaptive Bahnkorrektur der Manipulationsvorrichtung (21) ermöglicht, wobei die optische Messvorrichtung (20) ein Interferometer mit einem Strahlteiler (4) aufweist, wobei die Vorrichtung zum Heranführen der Messvorrichtung (20) auf einen definierten Abstand an die Bauteiloberfläche eingerichtet ist, wobei die Messvorrichtung (20) zur Ermittlung von Geometriedaten des Bauteils (1) mit Hilfe von Weißlichtinterferometrie eingerichtet ist, und wobei das elektronisches Auswertemittel (14) zur Auswertung von Geometriedaten eingerichtet ist, wobei das elektronisches Auswertemittel (14) zur automatischen Erkennung und/oder Klassifizierung von Rissen (2) und/oder anderen Beschädigungen und zur Speicherung der Position der Risse (2) und/oder anderer Beschädigungen eingerichtet ist.

8. Vorrichtung nach Anspruch 7, **dadurch gekennzeichnet, dass** die Manipulationsvorrichtung (21) einen Roboterarm (15) und/oder einen Drehtisch (16) umfasst.

9. Vorrichtung nach einem der Ansprüche 7 oder 8, **dadurch gekennzeichnet, dass** die Vorrichtung ein automatisiertes Regallager (13) umfasst, in welchem das Bauteil (1) und vorzugsweise zusätzlich ein Werkstückträger (9), gelagert wird.

10. Vorrichtung nach einem der Ansprüche 7 bis 9, **dadurch gekennzeichnet, dass** die Vorrichtung einen Umlenkspiegel und/oder ein Endoskop für die Messvorrichtung (20) umfasst.

11. Vorrichtung nach einem der Ansprüche 7 bis 10, **dadurch gekennzeichnet, dass** das Auswertemittel (14) die Geometrieinformationen anhand vordefinierter Merkmale und/oder Soll-Konturen und/oder Toleranzen und/oder Schadensbildern und/oder erlernter Regeln und/oder Vorkenntnisse über die zu erwartenden Geometrieinformationen automatisch auswertet und zur Erkennung und/oder Klassifikation von Beschädigungen nutzt.

## Claims

1. Method for detecting cracks in an aircraft component (1) or in a gas turbine component (1) using an optical measurement device (20), **characterised in that** the optical measurement device (20) comprises a distance sensor and an interferometer with a beam splitter (4), wherein the method comprises at least the following steps:
a) guiding the measurement device (20) towards the surface of the component at a defined distance,
b) determination of geometric data of the component (1) using an optical measurement method, wherein the optical measurement method is an interferometric method, wherein the geometric data is determined by means of white light interferometry,
c) evaluation of the geometric data by an electronic evaluation means (14), wherein cracks (2) and/or other damage being automatically detected and/or automatically classified, and the position of the cracks (2) and/or of other damage being stored.

2. Method according to claim 1, **characterised in that** the determined geometric data is automatically compared with preferably mathematically predefined and stored features and/or set contours and/or tolerances and/or damage patterns.

3. Method according to claim 1 or claim 2, **characterised in that** the determined geometric data is also used for a measurement of the component (1).

4. Method according to any one of the preceding claims, **characterised in that** the aircraft component (1) or gas turbine component (1) is a combustion chamber component of an aircraft engine.

5. Method according to any one of the preceding claims, **characterised in that** the evaluated geometric data is used to establish the need for, and/or extent of, repairs of the component (1).

6. Method according to claim 5, **characterised in that** the evaluated geometric data is used for a subsequent, preferably automated repair and/or machining operation of the component (1).

7. Device for detecting cracks in an aircraft component (1) or gas turbine component (1), **characterised in that** the device has an optical measurement device (20) and an electronic evaluation means (14), wherein the device comprises a manipulation device (21), by which the measurement device (20) and the component (1) can be moved relative to one another, wherein the optical measurement device (20) comprises a distance sensor which allows an automatic online-adaptive and/or offline-adaptive path correction of the manipulation device (21) by the control device (10), wherein the optical measurement device (20) comprises an interferometer with a beam splitter (4), wherein the device is configured to guide the measurement device (20) towards the surface of the component at a defined distance, wherein the measurement device (20) is configured to determine geometric data by means of white light interferometry, and wherein the electronic evaluation means (14) is configured to evaluate the geometric data, wherein the electronic evaluation means (14) is configured to automatically detect and/or automatically classify cracks (2) and/or other damage and to store the position of the cracks (2) and/or of other damage.

8. Device according to claim 7, **characterised in that** the manipulation device (21) comprises a robotic arm (15) and/or a rotary table (16).

9. Device according to any one of claims 7 or 8, **characterised in that** it comprises an automated shelf storage (13), in which the component (1) and preferably also a workpiece carrier (9) are stored.

10. Device according to any one of claims 7 to 9, **characterised in that** it comprises a deflection mirror and/or an endoscope for the measurement device (20).

11. Device according to any one of claims 7 to 10, **characterised in that** the evaluation means (14) automatically evaluates the geometric information using predefined features and/or set contours and/or tolerances and/or damage patterns and/or learned rules and/or prior knowledge about the geometric information to be expected, and uses the evaluated geometric information for the detection and/or classification of damage.

## Revendications

1. Procédé de contrôle de fissures d'une pièce structurale (1) d'avion ou de turbine à gaz au moyen d'un dispositif de mesure optique (20), **caractérisé en ce que** le dispositif de mesure optique (20) présente un capteur de distance et un interféromètre avec un diviseur de faisceau (4), le procédé présentant au moins les étapes consistant à :
a) approcher le dispositif de mesure (20) à une distance définie de la surface de la pièce structurale,
b) déterminer des données géométriques de la pièce structurale (1) à l'aide d'un procédé de mesure optique, le procédé de mesure optique étant un procédé interférométrique, les données géométriques étant déterminées à l'aide de l'interférométrie en lumière blanche,
c) évaluer les données géométriques par un moyen d'évaluation électronique (14), les fissures (2) et/ou autres dommages étant automatiquement détectés et/ou automatiquement classifiés et la position des fissures (2) et/ou autres dommages étant mémorisée.

2. Procédé selon la revendication 1, **caractérisé en ce que** les données géométriques déterminées sont automatiquement comparées avec des caractéristiques et/ou des contours de consigne et/ou des tolérances et/ou des types de dommages de préférence prédéfinis mathématiquement et mémorisés.

3. Procédé selon la revendication 1 ou 2, **caractérisé en ce que** les données géométriques déterminées sont utilisées en plus pour une mesure de la pièce structurale (1).

4. Procédé selon l'une des revendications précédentes, **caractérisé en ce que** la pièce structurale (1) d'avion ou de turbine à gaz est une pièce structurale de chambre de combustion d'un réacteur d'avion.

5. Procédé selon l'une des revendications précédentes, **caractérisé en ce que** les données géométriques évaluées sont utilisées pour déterminer la nécessité et/ou l'étendue d'une réparation de la pièce structurale (1).

6. Procédé selon la revendication 5, **caractérisé en ce que** les données géométriques évaluées sont utilisées pour une réparation et/ou un usinage consécutif, de préférence automatisé, de la pièce structurale (1).

7. Dispositif de contrôle de fissures d'une pièce structurale (1) d'avion ou de turbine à gaz, **caractérisé en ce que** le dispositif présente un dispositif de mesure optique (20) et un moyen d'évaluation électronique (14), le dispositif comprenant un dispositif de manipulation (21) au moyen duquel le dispositif de mesure (20) et la pièce structurale (1) peuvent être déplacés l'un par rapport à l'autre, le dispositif de mesure optique (20) comprenant un capteur de distance qui permet une correction de trajectoire adaptative en ligne et/ou hors ligne automatique du dispositif de manipulation (21) à l'aide d'un moyen de commande (10), le dispositif de mesure optique (20) comprenant un interféromètre avec un diviseur de faisceau (4), le dispositif étant conçu pour approcher le dispositif de mesure (20) à une distance définie de la surface de la pièce structurale, le dispositif de mesure (20) étant conçu pour déterminer des données géométriques de la pièce structurale (1) à l'aide de l'interférométrie en lumière blanche et le moyen d'évaluation électronique (14) étant conçu pour évaluer les données géométriques, le moyen d'évaluation électronique (14) étant conçu pour détecter et/ou classifier automatiquement les fissures (2) et/ou autres dommages et pour mémoriser la position des fissures (2) et/ou autres dommages.

8. Dispositif selon la revendication 7, **caractérisé en ce que** le dispositif de manipulation (21) comprend un bras de robot (15) et/ou un plateau tournant (16).

9. Dispositif selon la revendication 7 ou 8, **caractérisé en ce que** le dispositif comprend un magasin à rayonnages (13) automatisé, dans lequel la pièce structurale (1) est stockée et de préférence en plus un support de pièces (9).

10. Dispositif selon l'une des revendications 7 à 9, **caractérisé en ce que** le dispositif comprend un miroir de renvoi et/ou un endoscope pour le dispositif de mesure (20).

11. Dispositif selon l'une des revendications 7 à 10, **caractérisé en ce que** le moyen d'évaluation (14) évalue automatiquement les informations géométriques à l'aide de caractéristiques et/ou de contours de consigne et/ou de tolérances et/ou de types de dommages prédéfinis et/ou de règles apprises et/ou de connaissances préalables sur les informations géométriques à attendre et les utilise pour détecter et/ou classifier des dommages.
